# EUROPÄISCHE PATENTSCHRIFT

(11) **EP 0 872 396 B1**
(45) Veröffentlichungstag und Bekanntmachung des Hinweises auf die Patenterteilung: **21.05.2003**
(21) Anmeldenummer: 98104835.8
(22) Anmeldetag: 17.03.1998
(51) Int. Cl.: B60T 8/36, F16H 61/00, F16K 27/00

(54) **Ventilsteuergerät**
Valve control device
Dispositif de commande de valves

(30) Priorität: 16.04.1997 DE 19715916
(43) Veröffentlichungstag der Anmeldung: 21.10.1998
(73) Patentinhaber: SIEMENS AKTIENGESELLSCHAFT, 80333 München (DE)
(72) Erfinder: Rauner, Hans, Dr., 93149 Nittenau (DE); Schöttl, Johannes, 93086 Wörth (DE)

(56) Entgegenhaltungen:
- EP-A- 0 539 770
- EP-B- 0 499 670
- WO-A-89/05746
- WO-A-89/10286
- WO-A-91/10583
- WO-A-92/12878
- WO-A-95/21758
- DE-A- 4 300 342
- DE-A- 19 545 011

## Beschreibung

Die Erfindung betrifft ein Ventilsteuergerät gemäß dem Oberbegriff von Anspruch 1 und ein Verfahren zum Anbringen eines Ventilsteuergeräts an einem Ventilblock. Solche Ventilsteuergeräte werden insbesondere zur Steuerung eines Bremssystems oder eines Automatikgetriebes in einem Kraftfahrzeug eingesetzt.

Ein derartiges Ventilsteuergerät ist aus der Patentschrift EP 0 499 670 B1 bekannt. Bei der Herstellung dieses Steuergeräts wird eine Aluminiumplatte als Wärmesenke auf die Leiterplatte geklebt. Danach wird die Leiterplatte mit elektronischen Bauteilen bestückt und gelötet. Ein Spulenträger mit integrierter Steckerleiste wird mittels zweier Spritzvorgänge als Hart-/Weich-Verbund hergestellt. Die bestückte Leiterplatte wird in den Spulenträger gelötet. In die Dichtnut des Spulenträgers wird daraufhin Kleber dosiert und ein Deckel aufgesetzt. Der Kleber muß anschließend aushärten.

Aus der Offenlegungsschrift DE 43 00 342 A1 ist ein Steuergerät für einen Airbag eines Kraftfahrzeugs mit einem wannenförmigen Gehäuse bekannt, das als dreidimensionale Leiterplatte ausgebildet ist. An seiner Außenwand ist eine ganzflächige Metallschicht aufgebracht. Die Innenwand ist mit Leiterbahnen versehen. Damit kann eine Schaltung im Gehäuseinneren kompakt und störsicher ausgebildet werden.

Aus der Offenlegungsschrift WO 89/10286 ist eine elektrohydraulische Druckregelvorrichtung bekannt, bei der ein plattenförmiges Trägerelement vorgesehen ist, das in seinem Inneren und an der Oberfläche Leiterbahnen und elektrische Bauteile aufnimmt. Dabei weist das Trägerelement auch Kontaktstifte auf, die zusammen mit Federkontaktelementen einer Ventilspule Klemmkontakte herstellen. Es ist ein Ziel der Erfindung, ein Ventilsteuergerät bereitzustellen, das sich besonders einfach fertigen und mit Ventilspulen verbinden läßt.

Dieses Ziel wird mit einem Ventilsteuergerät und mit einem Verfahren erreicht, wie sie in den unabhängigen Ansprüchen definiert sind. Zweckmäßige Weiterbildungen der Erfindung sind in den Unteransprüchen angegeben.

Da das Gehäuse selbst Leiterbahnen aufweist, kann eine Leiterplatte eingespart werden. Ferner kann auf eine Metallplatte als Wärmesenke verzichtet werden, wenn über ein metallisierte Anlagefläche der Gehäuseinnenseite eine thermische Verbindung von der elektronischen Schaltung zum Ventilblock besteht.

Vorteilhafterweise kann auf ein umständliches Einlöten der Ventilspulen in eine Leiterplatte innerhalb eines Gehäuserahmens verzichtet werden.

Weitere Vorteile, Merkmale und Anwendungsmöglichkeiten der Erfindung ergeben sich aus der nachfolgenden Beschreibung der Ausführungsbeispiele in Verbindung mit den Zeichnungen. Es zeigt:
- Figur 1: ein Ventilsteuergerät mit einem einstückigen Gehäuse, und
- Figur 2: ein Ventilsteuergerät mit einem zweiteiligen Gehäuse.

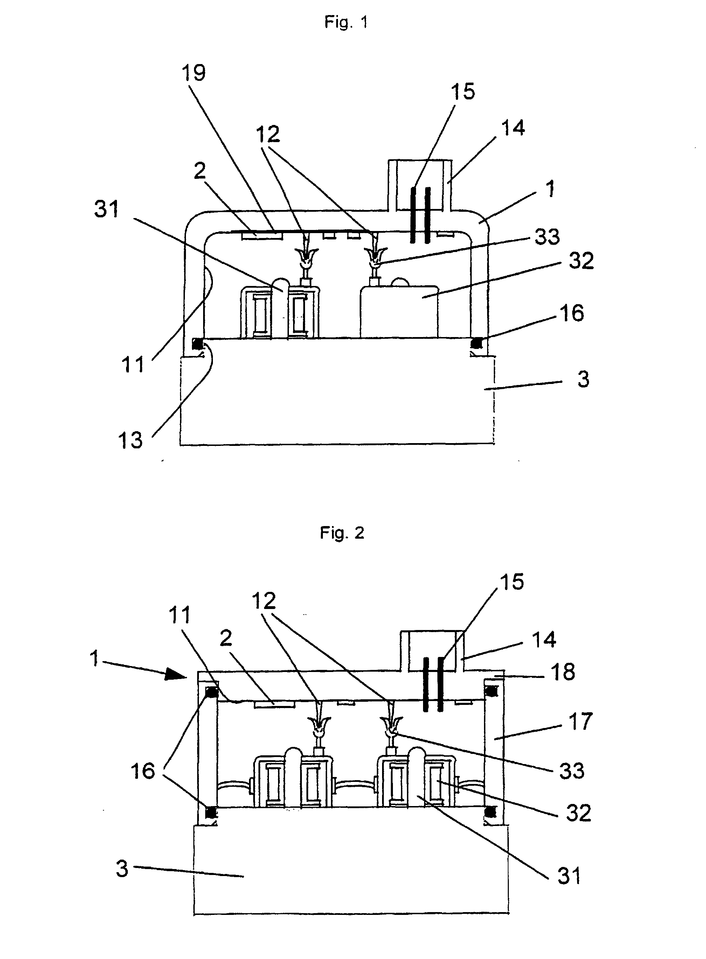

Figur 1 zeigt ein einteiliges, in MID-Technik (Moulded Interconnected Device) hergestelltes, wannenförmiges Gehäuse 1. Dieses weist an seiner Gehäuseinnenseite 11 eine Metallisierung in Form von Leiterbahnen 19 auf. Ein solches dreidimensionales Gehäuse kann beispielsweise hergestellt werden, indem die Oberfläche des Kunststoffes galvanisch mit einer Metallisierung versehen wird und die Leiterbahnen mittels Laser gebildet werden. Alternativ kann das Gehäuse eine flexible Folie mit Leiterbahnen aufnehmen.

Die Gehäuseinnenseite 11 wird direkt mit elektronischen Bauteilen einer Steuerschaltung 2 bestückt und gelötet. Als Kunststoff, der gegen die Lötwärme hinreichend beständig ist, eignet sich beispielsweise Polycarbonat.

Spulenkontakte 12 können entweder in das Gehäuse 1 eingespritzt werden oder einstückig mit dem Gehäuse ausgebildet und mit einer Metallisierung versehen sein.

Zur Montage werden zunächst Ventilspulen 32 auf Ventile 31 eines Ventilblocks 3 eines Antiblockiersystems (ABS) gesteckt und zentriert. Die Ventilspulen 32 weisen zangenartige Messerschneidkontakte 33 mit elastischen Bügeln auf. Bei der Montage des Gehäuses 1 auf den Ventilblock 3 spreizt ein flach ausgebildeter Spulenkontakt 12 die Bügel oder Kontaktfedern eines Messerschneidkontakts 33 und stellt somit einen lösbaren elektrischen Berührungskontakt her. Ein Löten oder eine chemische Verbindung der zu kontaktierenden Anschlüsse wird vermieden.

Die Abdichtung des Gehäuses 1 gegenüber dem Ventilblock 3 erfolgt durch eine als O-Ring ausgebildete Dichtung 16. Hierzu sollten die Kanten des Ventilblocks 3 abgerundet sein. Eine zusätzliche Abdichtung zwischen den Ventilspulen 32 und der Steuerschaltung 2 oder zwischen der Steuerschaltung 2 und einem Gehäusedeckel ist nicht erforderlich. Ferner muß keine Leiterplatte in ein Gehäuse montiert und dort gelötet werden.

Eine Steckerleiste 14 ist einstückig mit dem Gehäuse 1 verbunden. Steckerkontakte 15 der Steckerleiste 14 sind in das Gehäuse eingespritzt.

Die Metallisierung an der Gehäuseinnenseite 11 eignet sich sehr gut zur Ableitung der in elektronischen Bauteilen der Steuerschaltung 2 entstehenden Wärme. Diese kann über eine metallisierte Anlagefläche 13 an der Gehäuseinnenseite 11 an den metallischen Ventilblock 3 abgegeben werden.

Figur 2 zeigt ein zweiteiliges Gehäuse 1 mit einem Rahmen 17 und einem Deckel 18. Der an der Gehäuseinnenseite 11 eben ausgebildete Deckel 18, der keine Seitenwände aufweist, läßt sich besonders einfach mit elektronischen Bauteilen bestükken.

Die Ventilspulen 32 sind in den Gehäuserahmen 17 eingespritzt und über Kunststoffbänder elastisch verankert, so daß Toleranzen bei der Montage des Ventilsteuergeräts auf den Ventilblock 3 ausgeglichen werden können. Alle Ventilspulen 32 werden zusammen mit dem Gehäuserahmen 17 auf dem Ventilblock 3 in einem Arbeitsgang angebracht. Durch das anschließende Aufsetzen des Deckels 18 wird gleichzeitig das Gehäuse 1 nach außen verschlossen und ein elektrischer Berührungskontakt zwischen der Steuerschaltung 2 und den Ventilspulen hergestellt. Sowohl die Abdichtung des Deckels 18 gegenüber dem Rahmen 17 als auch die Abdichtung des Rahmen 17 gegenüber dem Ventilblock 3 kann mittels O-Ring-Dichtungen erfolgen.

## Patentansprüche

1. Ventilsteuergerät mit einem Gehäuse (1) und einer darin angeordneten elektronischen Schaltung (2) zur Steuerung von auf Ventile (31) aufsetzbaren Ventilspulen (32),
**dadurch gekennzeichnet, daß**
- das Gehäuse (1) als Leiterbahnträger ausgebildet ist,
- das Gehäuse (1) die elektronische Schaltung (2) trägt, und
- das Gehäuse (1) Leiterbahnen (19) mit zur Gehäuseinnenseite ragenden Kontakten (12) zur Herstellung eines elektrischen Berührungskontakts mit Gegenkontakten (33) der Ventilspulen (32) aufweist.

2. Ventilsteuergerät nach Anspruch 1, **dadurch gekennzeichnet, daß** von einer Gehäuseinnenseite (11) Steckkontakte (12) zum Kontaktieren der Ventilspulen (32) abragen.

3. Ventilsteuergerät nach dem vorhergehenden Anspruch, **dadurch gekennzeichnet, daß** die Steckkontakte (12) einstückig mit dem Gehäuse (1) ausgebildet sind.

4. Ventilsteuergerät nach Anspruch 1, **dadurch gekennzeichnet, daß** der Berührungskontakt ein Druckkontakt ist.

5. Ventilsteuergerät nach Anspruch 1, **dadurch gekennzeichnet, daß** die Ventilspulen (32) nicht gegenüber der Steuerschaltung (2) abgedichtet sind.

6. Ventilsteuergerät nach Anspruch 1, **dadurch gekennzeichnet, daß** eine Gehäuseinnenseite (11) eine metallisierte Anlagefläche (13) zum thermischen Verbinden der Steuerschaltung (2) mit einem Ventilblock (3) aufweist.

7. Ventilsteuergerät nach Anspruch 1, **dadurch gekennzeichnet, daß** die Gehäuseinnenseite (11) eine umlaufende Dichtung (16) zur dichtenden Anlage an einen Ventilblock (3) aufweist.

8. Ventilsteuergerät nach Anspruch 1, **dadurch gekennzeichnet, daß** die Ventilspulen (32) an einem separaten Gehäuseteil (17) befestigt sind.

9. Ventilsteuergerät nach Anspruch 1, **dadurch gekennzeichnet, daß** das Gehäuse (1) wannen- oder becherförmig und einstückig ausgebildet ist.

## Claims

1. Valve control unit with a housing (1), and an electronic circuit (2) arranged within it, for control of valve solenoids (32) that can be fitted to valves (31),
**characterised in that**
- the housing (1) is designed as a printed conductor carrier,
- the housing (1) carries the electronic circuit (2), and
- the housing (1) has printed conductors (19) with contacts (12) projecting towards the inside of the housing for establishing an electrical touch contact with mating contacts (33) of the valve solenoids (32).

2. Valve control unit according to Claim 1, **characterised in that** plug-contacts (12) for contacting the valve solenoids (32) project downwards from the housing inside (11).

3. Valve control unit according to the preceding claim, **characterised in that** the plug-contacts (12) form a single piece with the housing (1).

4. Valve control unit according to claim 1, **characterised in that** the touch contact is a pressure contact.

5. Valve control unit according to claim 1, **characterised in that** the valve solenoids (32) are not sealed against the control circuit (2).

6. Valve control unit according to claim 1, **characterised in that** one housing inside (11) has a metalised contact surface (13) for forming a thermal connection of the control circuit (2) to a valve block (3).

7. Valve control unit according to claim 1, **characterised in that** the housing inside (11) has an annular seal (16) for a sealing contact with a valve block (3).

8. Valve control unit according to claim 1, **characterised in that** the valve solenoids (32) are secured to a separate housing part (17).

9. Valve control unit according to claim 1, **characterised in that** the housing (1) is trough- or cup-shaped and formed as one piece.

## Revendications

1. Dispositif de commande de valve(s), comportant un boîtier (1) et un circuit électronique (2) monté dans celui-ci pour la commande de bobines de valve (32) pouvant être placées sur des valve(s) (31),
**caractérisé en ce que**
- le boîtier (1) est agencé comme support de pistes conductrices,
- le boîtier (1) porte le circuit électronique (2), et
- le boîtier (1) comporte des pistes conductrices (19) ayant des éléments de contact (12) dirigés vers l'intérieur du boîtier afin d'établir un contact électrique avec des éléments de contact correspondants (33) des bobines de valve (32).

2. Dispositif de commande de valve(s) selon la revendication 1, **caractérisé en ce que** des fiches de contact (12) destinées à établir un contact avec les bobines de valve (32) font saillie à partir d'une face intérieure (11) du boîtier.

3. Dispositif de commande de valve(s) selon la revendication précédente, **caractérisé en ce que** les fiches de contact (12) sont formées d'une seule pièce avec le boîtier (1).

4. Dispositif de commande de valve(s) selon la revendication 1, **caractérisé en ce que** le contact électrique est un contact par pression.

5. Dispositif de commande de valve(s) selon la revendication 1, **caractérisé** en se que les bobines de valve (32) ne sont pas rendues étanches par rapport au circuit de commande (2).

6. Dispositif de commande de valve(s) selon la revendication 1, **caractérisé en ce qu'**une surface intérieure (11) du boîtier comporte une face de contact métallisée (13) afin d'établir une connexion thermique du circuit de commande (2) avec un bloc de valve(s) (3).

7. Dispositif de commande de valve(s) selon la revendication 1, **caractérisé en ce que** la face intérieure du boîtier (11) comporte un joint périphérique (16) pour former un contact étanche avec un bloc de valve(s) (3).

8. Dispositif de commande de valve(s) selon la revendication 1, **caractérisé en ce que** les bobines de valve (32) sont fixées à une pièce de boîtier séparée (17).

9. Dispositif de commande de valve(s) selon la revendication 1, **caractérisé en ce que** le boîtier (1) a la forme d'une cuvette ou d'un gobelet et est formé d'une seule pièce.
